(19) Europäisches Patentamt
European Patent Office
Office européen des brevets

(11) **EP 2 120 158 A1**

(12) **EUROPEAN PATENT APPLICATION**
published in accordance with Art. 153(4) EPC

(43) Date of publication:
**18.11.2009 Bulletin 2009/47**

(51) Int Cl.:
***G06F 17/30*** (2006.01)  ***G06F 21/24*** (2006.01)
***G06Q 50/00*** (2006.01)

(21) Application number: **08711484.9**

(22) Date of filing: **18.02.2008**

(86) International application number:
**PCT/JP2008/052660**

(87) International publication number:
**WO 2008/108158 (12.09.2008 Gazette 2008/37)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.03.2007 JP 2007053300**

(71) Applicant: **NEC Corporation**
**Minato-ku**
**Tokyo 108-8001 (JP)**

(72) Inventor: **TAKENOUCHI, Takao**
**Tokyo 108-8001 (JP)**

(74) Representative: **Betten & Resch**
**Patentanwälte**
**Theatinerstrasse 8**
**(Fünf Höfe)**
**80333 München (DE)**

(54) **INFORMATION DISCLOSURE CONTROL SYSTEM, INFORMATION DISCLOSURE CONTROL PROGRAM, AND INFORMATION DISCLOSURE CONTROL METHOD**

(57)   To provide a personal information disclosure control method and the like with which desired services can be received by disclosing minimum necessary personal information. An information disclosure control system includes: a detail level converting section which acquires personal information, and generates disclosure personal information whose detail level is below a detail level of the acquired personal information; and an information disclosure control section which transmits a service request including the disclosure personal information, receives a service result from the service providing device in response to the service request, judges whether or not the service result satisfies a service result satisfaction condition, controls the detail level converting section to regenerate disclosure personal information of a higher detail level than the detail level of the disclosure personal information transmitted when acquiring the service result if judging that the condition is not satisfied, and transits the regenerated disclosure personal information to the service providing device.

FIG. 1

EP 2 120 158 A1

**Description**

TECHNICAL FIELD

The present invention relates to a technique for suppressing personal information that is disclosed when utilizing a service provided by an information processing system. More specifically, the present invention relates to an information disclosure control system and the like with which desired services can be received by disclosing minimum necessary personal information.

BACKGROUND ART

There have been services that are provided by using an information processing technique with which a server or the like receives personal information as an input, executes some kind of processing based thereupon, and returns a processing result. For example, there has been a service for searching places such as nearby restaurants by utilizing a positional information acquiring function using a GPS (Global Positioning System) module built-in to a portable telephone and the like or using a base station. However, positional information using GPS or a base station in many cases is detailed positional information that is far more detailed than it is required for providing the service. Therefore, there has been such an issue that the detailed positional information that is far more detailed than necessary is provided to the service. As a result, there has been a demand for a method with which the service can be received by providing the minimum necessary positional information.

Patent Document 1 discloses a search system which provides the position of a search target to a search terminal by utilizing GPS. This search system is structured to set a non-search area in advance, and not to provide positional information to the search terminal when the user is within the non-search area.

Patent Document 2 depicts a personal information providing system and the like, which provide personal information stored in an information providing server to an information user according to a policy determined in advance by an information providing administrator.

Patent Document 1: Japanese Unexamined Patent Publication 2003 - 284124
Patent Document 2: Japanese Unexamined Patent Publication 2002 - 324068

When utilizing a service by using personal information, the personal information is disclosed to the service to obtain a result from the service. However, the personal information includes privacy, so that it is desired to suppress disclosure of the personal information to the service as much as possible. Accordingly, there are following issues.

(1) There are cases where an expected result can be obtained by simply disclosing more ambiguous information without disclosing detailed personal information.
(2) There are cases where no result can be obtained even though detailed personal information is disclosed.

It is therefore an object of the present invention to provide a personal information disclosure control method and the like with which a desired service can be received by disclosing minimum necessary personal information.

DISCLOSURE OF THE INVENTION

An information disclosure control system of the present invention includes: a detail level converting section which acquires personal information, and generates disclosure personal information whose detail level is below a detail level of the acquired personal information; and an information disclosure control section which transmits a service request including the disclosure personal information to a service providing device, receives a service result transmitted from the service providing device in response to the service request, judges whether or not the service result satisfies a service result satisfaction condition, controls the detail level converting section to regenerate disclosure personal information of a higher detail level than the detail level of the disclosure personal information transmitted when acquiring the service result if judging that the service result does not satisfy the condition, and transmits the regenerated disclosure personal information to the service providing device.

It is also possible to overcome the issues described above by an information disclosure control program and an information disclosure control method of the present invention as well.

The present invention makes it possible to receive a desired service by disclosing minimum necessary personal information to the service providing device.

BEST MODES FOR CARRYING OUT THE INVENTION

Next, embodiments of the invention will be described by referring to the drawing.

First, a hierarchical expression method in this Description regarding positional information as a kind of personal information will be described.

When expressed as "Area_i⊃Area_(i+1)", it means that "Area_(i+1)" is included in "Area_i", and "Area_(i+1)" is positional information existing within "Area_i". That is, when a given object exists within "Area_(i+1)", it also exists in "Area_i". Further, "Area_i" expresses a wider range than "Area_(i+1)". Thus, "Area_i" is more ambiguous positional information than "Area_(i+1)", and "Area_(i+1)" is more detailed positional information than "Area_i". Such expression can be provided by using an ontology technique.

For example, a hierarchical expression of the positional information of Tokyo (Shiba 5-Chome, Minato-ku which is included within 23 wards), which is a users home address (Japan, which is included in Kanto region) becomes as follows. Japan ⊃ Kanto region ⊃ Tokyo ⊃ 23 wards ⊃ Minato-Ku ⊃ Shiba ⊃ 5 - Chome

In this Description, "personal information" is not limited only to the information from which an individual can be specified, but it includes all the information regarding an information indicating the property of individual, and information indicating the condition of the individual.

A first exemplary embodiment of the invention is described by referring to a case where the present invention is applied to a system for searching restaurants near a designated position, and the positional information is expressed hierarchically by using the ontology technique. This exemplary embodiment is an embodiment which searches restaurants that are search objects while disclosing personal information that is the positional information of the home address of a user in a step-by-step manner. As an example, a case of inputting the home address as the personal information will be described.

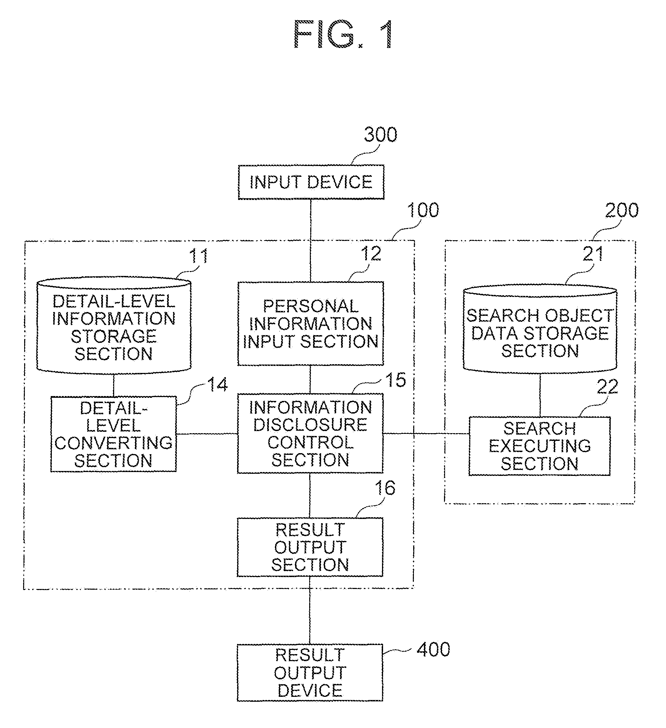

FIG. 1 shows the structure of the first exemplary embodiment of the invention. The structure of the first exemplary embodiment of the invention includes an information disclosure control section 100, a search section 200, an input device 300, and a result output device 400. Further, the information disclosure control section 100 includes a detail level information storage section 11, a personal information input section 12, a detail level converting section 14, an information disclosure control section 15, and a result output section 16. Further, the search section 200 includes a search object data storage section 21 and a search executing section 22.

The detail level information storage section 11 keeps address ontology for changing the detail levels of the positional information of the home address that is provided to the search section 200.

The search object data storage section 21 saves information of restaurants as search objects, such as the names of the restaurants, kinds and the like of food to be served, and the positional information of the search objects in a related manner.

The search executing section 22 extracts one or more search objects within a search range from the search objects stored in the search object data storage section 21 by considers the positional information received as an input from the information disclosure control section 15 as the search range, and returns the extracted objects as a search result to the information disclosure control section 15.

The personal information input section 12 receives the positional information of the user' s home address from the input device 300 as an input, and makes a request to the information disclosure control section 15 to execute processing thereof. In this exemplary embodiment, the personal information acquired by the personal information input section 12 is the personal information of the highest detail level.

The information disclosure control section 15 receives the positional information of the user' s home address from the personal information input section 12 as an input, and starts a control of search processing. The information disclosure control section 15 executes processing for receiving a search range from the detail level converting section 14, processing for transmitting the search range to the search executing section 22 to request the search, processing for receiving the search result from the search executing section 22 and judging next processing, and processing for transmitting the search result to the result output section 16.

The detail level converting section 14 executes processing when there is a request from the information, disclosure control section 15. When the information disclosure control section 15 requests to acquire the most ambiguous positional information, the detail level converting section 14 receives the positional information of the user's home address as an input, acquires the most ambiguous positional information as a first search range by utilizing the ontology that is saved in the detail level information storage section 11, and returns it to the information disclosure control section 15. Further, when the information disclosure control section 15 requests to acquire more detailed search range, the detail level converting section. 14 receives the search range from the information disclosure control section 15 as an input, acquires the more detailed positional information as a next search range by utilizing the ontology that is saved in the detail level information storage section 11, and returns it to the information disclosure control section 15. When the information disclosure control section 15 requests to acquire still more detailed search range, the detail level converting section 14 receives the search range from the information disclosure control section 15 as an input, judges whether or not it is possible to acquire the still more detailed positional information as a search range by utilizing the ontology that is saved in the detail level information storage section 11, and returns it to the information disclosure control section 15.

The result output section 16 receives the search result form the information disclosure control section 15 as an input, and outputs it to the result output section 400.

The input device 300 is a device such as a keyboard or a mouse, for example. The user inputs the positional information of the home address by utilizing the input device 300.

The result output device 400 is device such as a display device or a printer, for example, and it presents the result output received from the result output section 16 to the user.

Each of the above-described structural elements is implemented by controlling hardware through having a CPU of a computer execute a program.

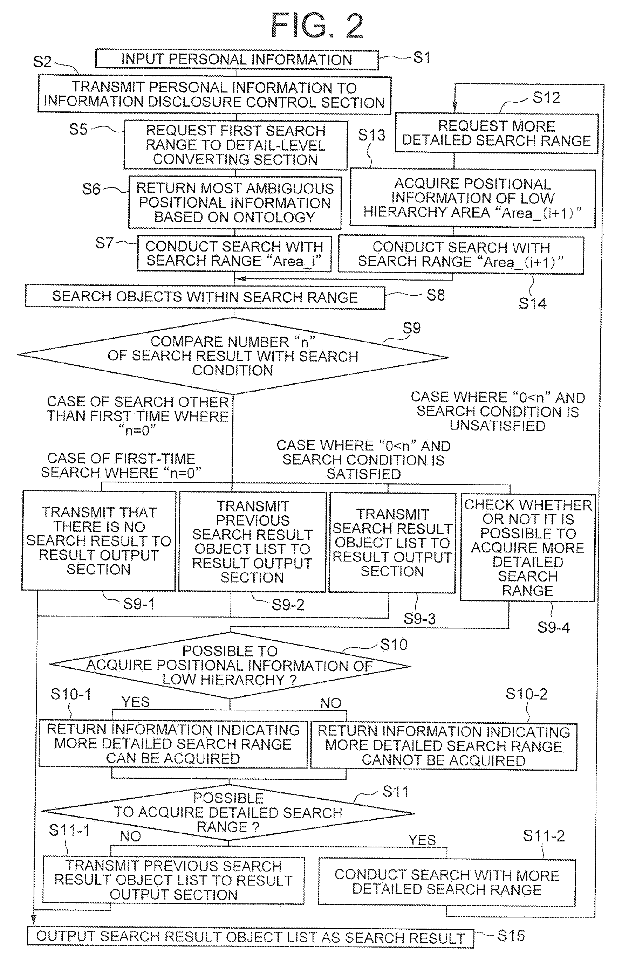

A flow of the operations of the first exemplary embodiment of the invention is illustrated in a flowchart of FIG. 2. This flow shows a case where the user desires to know "r" number of restaurants near the user's home.

In the first exemplary embodiment, it is assumed that the information of the user's home address can be expressed as following positional information by using the address ontology.

$$\text{Area\_0} \supset \text{Area\_1} \supset \text{Area\_2} \supset \text{Area\_3} \supset \cdots \supset \text{Area\_i} \supset \cdots \supset \text{Area\_end}$$

(S1) The user transmits the positional information of the home address to the personal information input section 12 by using the input device 300.

(S2) The personal information input section 12 transmits the positional information of the home address to the information disclosure control section 15 to request the processing.

(S5) The information disclosure control section 15 receives the home address information from the personal information input section 12 as an input, and starts the processing. First, the information disclosure control section 15 transmits the positional information of the home address to the detail level converting section 14, and requests a first search range.

(S6) The detail level converting section 14 acquires "Area_0" that is the ambiguous information (low detail level) of the highest hierarchical order from the positional information of the home address received as the input and the address ontology saved in the detail level information storage section 11, and returns "Area_0" to the information disclosure control section 15 as the first search range.

(S7) The information disclosure control section 15 transmits the search range received from the detail level converting section 14 to the search executing section 22 as "Area_i" and requests the search.

(S8) The search executing section 22 receives the search range "Area_i" from the information disclosure control section 15, refers to the information of the restaurants and the positional information of the restaurants saved in the search object data storage section 21, extracts zero or more pieces of restaurant information whose positional information is within the search range, and transmits a search result object list to the information disclosure control section 15 as the search result.

(S9) The information disclosure control section 15 receives the search result object list, and evaluates the number "n" of restaurants as the search result objects within the search range with respect to "r-number or less" that is a service result satisfaction condition set in advance.

(S9-1) If the first-time result is "n=0", the information disclosure control section 15 transmits to the resuit output section 16 that there is no search result (continues to S15).

(S9-2) If the result of search sometime after the first-time search is "n=0", the information disclosure control section 15 transmits the previous search result object list to the result output section 16 (continues to S15).

(S9-3) If "0<n" and "n" matches the condition "r-number or less", the information disclosure control section 15 transmits the search result object list to the result output section 16 (continues to S15).

(S9-4) If "0<n" and "n" does not match the condition "r-number or less", the information disclosure control section 15 transmits "Area_i" and the positional information of the home address to the detail level converting section 14, and inquires whether or not it is possible to acquire a more detailed search range (continues to S10).

(S10) The detail level converting section 14 receives "Area_i" and the positional information of the home address from the information disclosure control section 15 as an input, and checks whether or not there is positional information "Area_(i+1)" that is of a lower hierarchical order than "Area_i" based on the address ontology information saved in the detail level information storage section 11.

(S10-1) If there is positional information "Area_(i+1)" that is of a lower hierarchical order than "Area_i", the detail level converting section 14 returns information indicating that it is possible to acquire a more detailed search range to the information disclosure control section 15.

(S10-2) If there is no positional information "Area_ (i+1)" that is of a lower hierarchical order than "Area_i", the detail level converting section 14 returns information indicating that it is not possible to acquire a more detailed search range to the information disclosure control section 15.

(S12) The information disclosure control section 15 receives a result from the detail level converting section 14 indicating whether or not it is possible to acquire the more detailed search range.

(S11-1) If the more detailed search range cannot be acquired, it is unnecessary to conduct the search in the more detailed range. Thus, the previous search result object list is transmitted to the result output section 16 (continues to S15).

(S11-2) If the more detailed search range can be acquired, processing for conducting the search in the more detailed search range is executed (continues to S12).

(S12) The information disclosure control section 15 transmits "Area_i" and the positional information of the home address to the detail level converting section 14 to request a still more detailed search range.

(S13) The detail level converting section 14 receives "Area_i" from the information disclosure control section 15 as an input, acquires positional information "Area_(i+1)" that is of a lower hierarchical order than "Area_i" based on the address ontology saved in the detail-degree information storage section 11, and returns it to the information disclosure control section 15.

(S14) The information disclosure control section 15 transmits the acquired search range "Area_ (i+1) " to the search executing section 22 to request the search in the more detailed search range (continues to S8).

(S15) The result output section 16 receives the search result object list from the information disclosure control section 15, and outputs it to the result output device 400 as the search result.

This exemplary embodiment is the case where the positional information is put into a hierarchy by using the knowledge of the address ontology, and disclosed by changing the detail levels. As another case, there is also considered a system which discloses railroad sections in a gradually changing manner by using the knowledge regarding the railroads. For this, there is also considered a system which saves railroad information in the detail level information storage section 11, and has the user input the name of station the user desires to search to the personal information input section 12. For example, this may be applied to a system which searches apartments for rent located along the railroad line, with which a search is conducted first in a section within a range of five stations from Tamachi station, and section is narrowed down gradually.

Further, as another case, thee is considered a case which calculates radius distances from the user by using the knowledge of map information, and discloses the information by changing the detail levels gradually. For this, there is also considered a system in which the map information is saved in the detail level information storage section 11, and the current position of the user is acquired through the personal information input section 12. With this system, for example, restaurants may be searched by having the distance of 1-kilometer radius from the point of the user as the search range, and the radius distance may be narrowed down gradually.

Next, effects of the exemplary embodiment will be described.

In this exemplary embodiment, the detail level converting section 14 generates low detail level personal information (disclosure personal information) from the high detail level personal information inputted to the personal information input section 12 and the ontology information stored in the detail level information storage section 11, and the information disclosure control section 15 transmits it to the search section 200 (service providing device). The information disclosure control section 15 receives the search result (service result) from the search section 200, judges whether or not the search result satisfies the service satisfaction condition, and transmits the personal information with a still higher detail level to the search section 200 when the search result does not satisfy the condition.

Therefore, it is possible to acquire an expected search result by disclosing only the minimum necessary personal information to the search section 200.

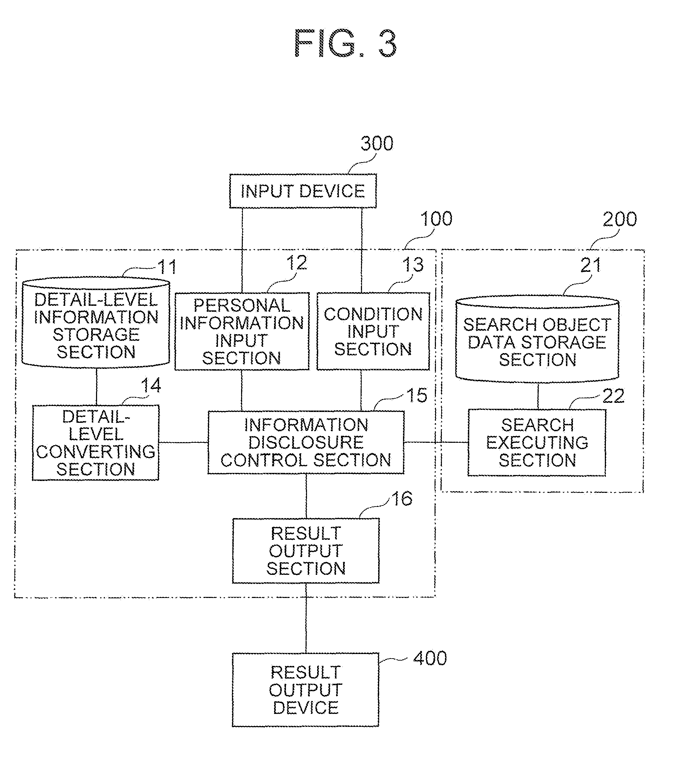

FIG. 3 shows the structure of a second exemplary embodiment of the invention. This exemplary embodiment is characterized to acquire the service result satisfaction condition from outside. This exemplary embodiment includes a condition input section 13 in addition to the structure of the first exemplary embodiment shown in FIG. 1. In the following embodiments, same reference numerals are applied to the structural elements that are in common to those of the first exemplary embodiment, and the explanations thereof are omitted.

The condition input section 13 receives a condition from the input device 300 as an input, and transmits it to the information disclosure control section 14. This makes it possible for the user to set the service result satisfaction condition freely.

The structure of a third exemplary embodiment is the same as that of FIG. 1. This exemplary embodiment is characterized to acquire the detail level of the personal information disclosed first from the service side. Operations of this exemplary embodiment will be described by referring to FTG. 2.

In steps S5 and S6 of FIG. 2, the information disclosure control section 15 first requests personal information of the lowest detail level to the detail level converting section 14 and has it as the first search range. However, this processing is changed to following processing.

(S5') The information disclosure control section 15 receives the home address information from the personal information input section 12 as an input, and starts the processing. First, the information disclosure control section 15 makes an inquiry to the search section 200 about the first search range to acquire information regarding the desired detail level, and transmits the home address positional information and the information regarding the detail level acquired from search section 200 to the detail level-level converting section 14.

(S6') The detail level converting section 14 calculates "Area 0" as the first search range from the home address positional information and the detail level of the information received as the input as well as the address ontology saved in the detail level information saving section 11, and returns it to the information disclosure control section 15.

This makes it possible to prevent sending of the personal information in the detail level that does not suit the service.

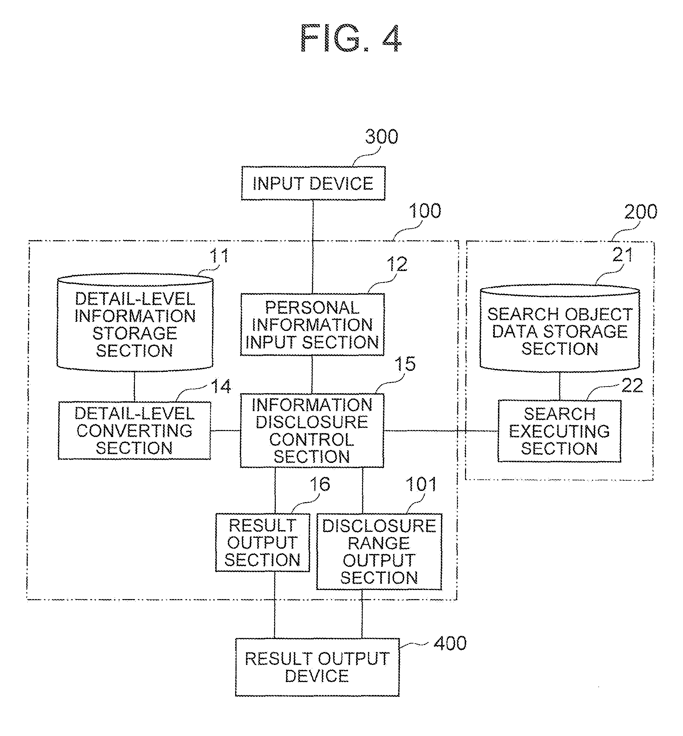

FIG. 4 shows the structure of a fourth exemplary embodiment of the invention. This exemplary embodiment is characterized to display the detail level of the personal information disclosed at last to the service when the result is outputted. This exemplary embodiment includes a disclose range output section 101 in addition to the structure of the first exemplary embodiment shown in FIG. 1.

After transmitting the search result object list to the result output section 16, the information disclosure control section 15 outputs, to the disclosed range output section 101, the personal information of the highest detail level among the personal information disclosed to the service. The disclosed range output section 101 receives the disclosed personal information as an input and transmits it to the result output device 400.

This makes it possible to present the detail level of the personal information disclosed at last to the service to the user, so that the user can know how much the disclosure of the personal information can be suppressed.

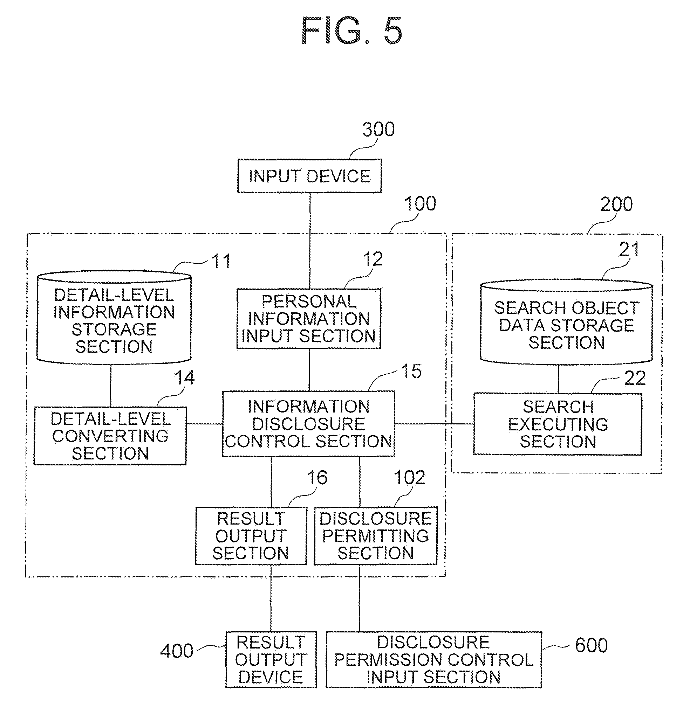

FIG. 5 shows the structure of a fifth exemplary embodiment of the invention. This exemplary embodiment is characterized to request permission to the user when disclosing more detailed information. This exemplary embodiment includes a disclosure permitting section 102 and a disclosure permission control input section 600 in addition to the structure of the first exemplary embodiment shown in FIG. 1.

The disclosure permitting section 102 receives the personal information to be disclosed as an input, makes an inquiry to the disclosure permission control input section 600 to have permission whether or not it is fine to disclose the information, and transmits the result to the information disclosure control section 15.

The disclosure permission control input section 600 receives the personal information to be disclosed as an input, and discloses the personal information to the user for allowing the user to judge whether or not it is fine to disclose the personal information to the service, and transmits the user's selected result to the disclosure permitting section. The user judges whether or not it is fine to disclose the displayed personal information.

This makes it possible to suppress disclosure of the personal information that is in the detail level the user does not intend to.

Operations of this exemplary embodiment will be described by referring to FIG. 2.

The information disclosure control section 15 executes the following steps between step S13 and step S14.

(S200) The information disclosure control section 15 transmits the personal information to be disclosed to the disclosure permitting section 102, and receives a judgment regarding whether or not it is fine to disclose the information or to end the processing without disclosing the information.

(200-1) When it is judged that it is fine to disclose the information, the information disclosure control section 15 continues the processing to execute the processing of step S14.

(200-2) When it is judged to end the processing without disclosing the information, the information disclosure control section 15 transmits the search result object list to the result output section 16, and executes the processing of step S15.

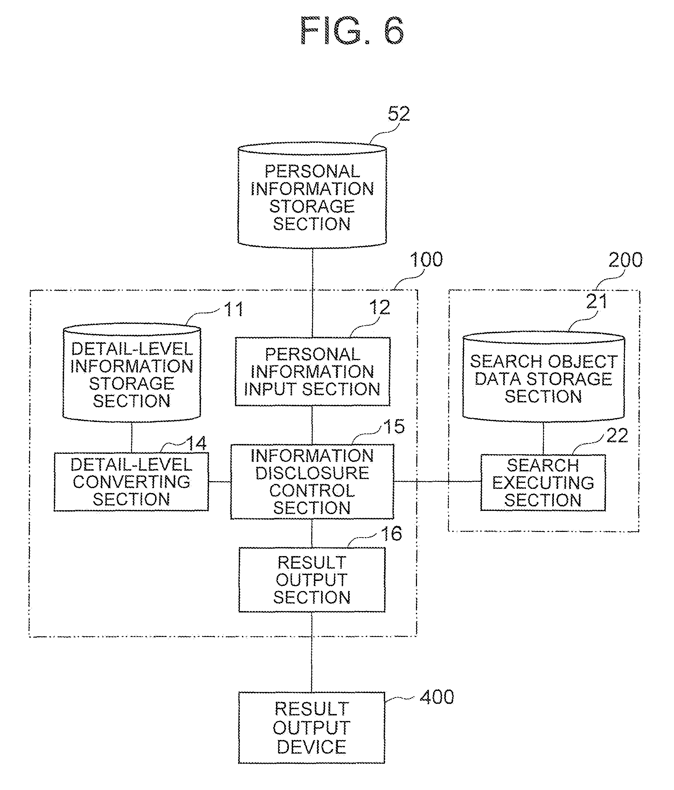

FIG. 6 shows the structure of a sixth exemplary embodiment of the invention. This exemplary embodiment is characterized to acquire personal information from outside without having the user input the personal information. This exemplary embodiment includes a personal information storage section 52 instead of the input device 300 of the structure of the first exemplary embodiment shown in FIG. 1.

The personal information storage section 52 is a database to which the information disclosure control section 100 can access, or a file saved in a storage unit of a personal computer used by the user, for example, which has the personal information of the user inputted in advance by the system administrator or the user stored therein.

In step S2 of FIG. 2, the personal information input section 12 reads the personal information saved in the personal information storage section 52, and transmits it to the information disclosure control section 15.

With this, it becomes unnecessary for the user to input the personal information by himself or herself when utilizing the service. Thus, the load of input for the user can be lightened.

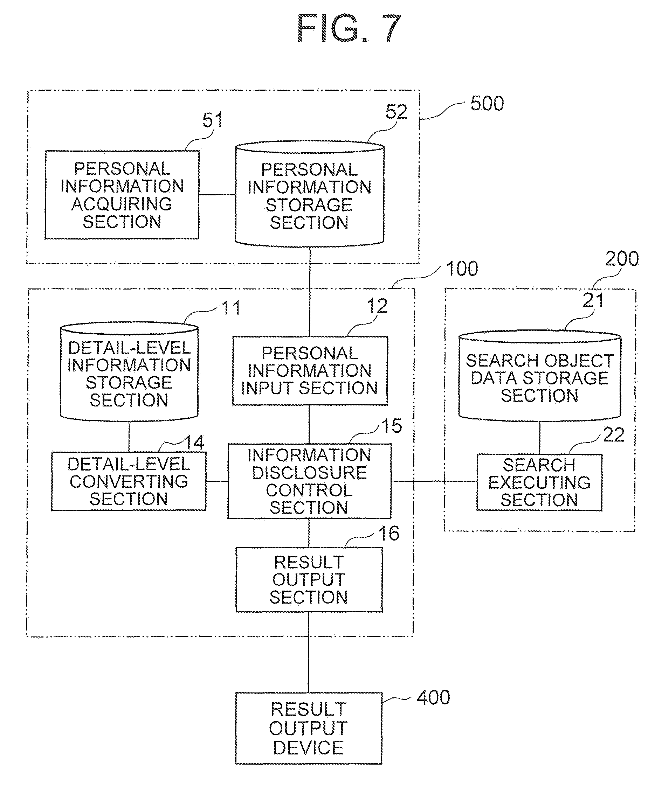

FIG. 7 shows the structure of a seventh exemplary embodiment of the invention. This exemplary embodiment is characterized to acquire dynamic personal information which changes depending on the position and the physical condition of the user, for example, by conducting measurements without having the user input the personal information. In addition to the position of the user, there are the body temperature, blood pressure, and the like of the user as the dynamic personal information. This exemplary embodiment includes a personal information control section 500 instead of the input device 300 of the structure of the first exemplary embodiment shown in FIG. 1.

The personal information control section 500 is configured with a personal information acquiring section 51 and a personal information storage section 52.

The personal information acquiring section 51 is a GPS module, for example, which measures the dynamic personal information such as the positional information of the user automatically, and saves it to the personal information storage section 52. The timing of the measurements may be set so as to conduct a measurement at a specific time interval or to conduct a measurement when the user starts up the browser, for example.

The user's personal information measured by the personal information acquiring section 51 is stored in the personal information storage section 52.

The personal information input section 12 acquires the personal information saved in the personal information storage section 52, and transmits it to the information disclosure control section 15 in step S2 of FIG. 2.

With this, it becomes unnecessary for the user to input the dynamic personal information by himself or herself when utilizing the service. Thus, the load of input for the user can be lightened.

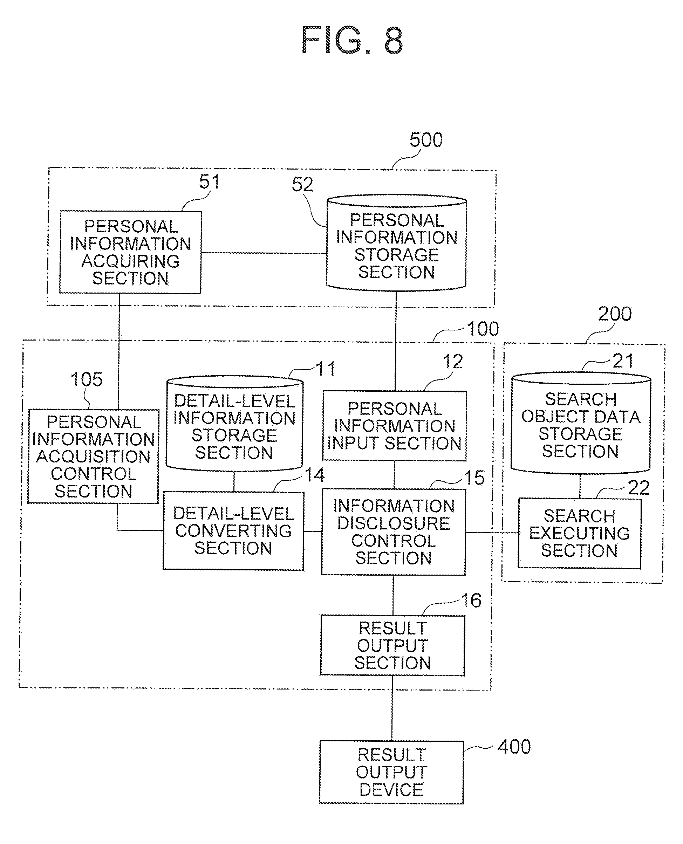

FIG. 8 shows the structure of an eighth exemplary embodiment of the invention. This exemplary embodiment is characterized to execute a control of the personal information acquiring section 51, when acquiring more detailed personal information. This exemplary embodiment includes a personal information acquisition control section 105 in addition to the structure of the seventh exemplary embodiment shown in FIG. 7. Further, the personal information acquiring section 51 includes a plurality of positioning devices whose generated positional information accuracies are different. Note that "a plurality of positioning devices" includes a case which physically has a single positioning device whose measurement accuracy can be varied depending on the setting.

The detail level converting section 14 has a function of requesting execution of processing to the personal information acquisition control section 105 when more detailed personal information becomes necessary. The personal information acquisition control section 105 has a function of giving a command to the personal information acquiring section 51 to acquire more detailed personal information.

For example, as current position acquiring methods, there are various kinds of positional information acquiring methods such as a positional information acquiring method using GPS, a positional information acquiring method using the intensity of radio waves of a portable telephone base station, and a positional information acquiring method using RFID (Radio Frequency Identification) tags and a reader, for example. Errors and costs vary for each of the positional information acquiring methods.

Thus, while the current position is acquired in step S1 of FIG. 2 by using the positional information acquiring method that has an error of 100 m, for example, this exemplary embodiment automatically executes processing in which a highly accurate current position is acquired by switching to the positional information acquiring method that has an error of 10 m, when the judgment in step S10 is "No", and proceeds to the processing of step S11-2.

In general, it is possible that the position acquiring method with a small error is high in cost. Thus, it is effective to suppress the cost by using the positional information acquiring method with larger errors first, and then shifting to the positional information acquiring methods with smaller errors gradually.

This makes it possible to suppress acquisition of the unnecessarily detailed personal information.

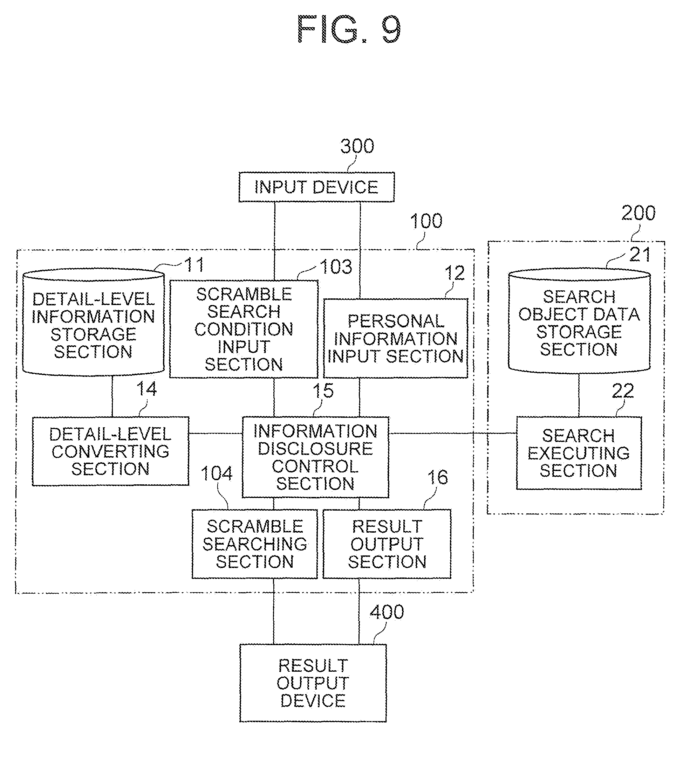

FIG. 9 shows the structure of a ninth exemplary embodiment of the invention. This exemplary embodiment is characterized to disclose personal information that is unnecessary to disclose the service so as to make it difficult to specify the personal information. This exemplary embodiment includes a scramble search condition input section 103 and a scramble searching section 104 in addition to the structure of the first exemplary embodiment shown in FIG. 1.

The scramble search condition is a condition that is set regarding how the scramble search is conducted. The scramble search is a service executing method which discloses personal information that is unnecessary to be disclosed to the service for making it difficult to specify the personal information.

The scramble search condition input section 103 receives the scramble search condition from the input device 300, and transmits it to the information disclosure control section 15.

When receiving the scramble search condition from the scramble search condition input section 103 and transmitting the personal information to the search executing section 22, the information disclosure control section 15 transmits the personal information and the scramble search condition to the scramble searching section 104, and receives one or more pieces of personal information for the scramble search. The information disclosure control section 15 transmits the one or more piece of received personal information to the search executing section 22 in order to execute the search.

The scramble searching section 104 receives the personal information and the scramble search condition from the information disclosure control section 15, transmits the personal information to the detail level converting section 14, acquires one or more pieces of personal information of the scramble search according to the scramble search condition, and transmits the acquired information to the information disclosure control section 15.

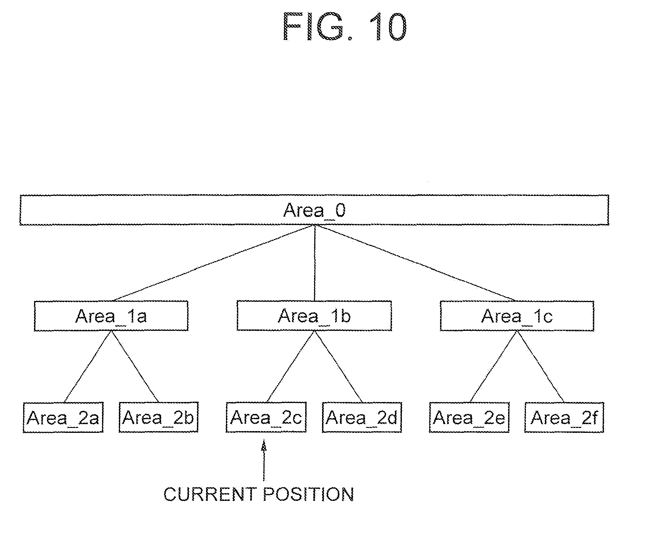

A flow of this exemplary embodiment will be described by referring to a case where the exemplary embodiment is applied to a system for searching the restaurants near the user's home, in which the service result satisfaction condition is set as "r-number of restaurants or less" and the scramble search condition is set to "execute the scramble search on 50 % of the search range in a same hierarchy". Further, the user's home address information is expressed in a hierarchical manner as in FIG. 10, and the positional information of the user's home address is assumed as "Area_2c".
FIG. 10 can be written as follows with the expressing method described above.

$$\text{Area\_0} \supset \text{Area\_1a}, \quad \text{Area\_0} \supset \text{Area\_1b}, \quad \text{Area\_0} \supset \text{Area\_1c},$$

$$\text{Area\_1a} \supset \text{Area\_2a}, \quad \text{Area\_1a} \supset \text{Area\_2b},$$

$$\text{Area\_1b} \supset \text{Area\_2c}, \quad \text{Area\_1b} \supset \text{Area\_2d},$$

$$\text{Area\_1c} \supset \text{Area\_2e}, \quad \text{Area\_1c} \supset \text{Area\_2f}$$

Operations of this exemplary embodiment are basically the same as those of the first exemplary embodiment shown in FIG. 2, so that only different processing will be described.

First, the scramble condition along with the personal information is inputted from the scramble condition inputting section 103 in step S1 of FIG. 2, and it is transmitted to the information disclosure control section 15 in step S2.

Then, following steps are added after the processing of step S13.

(S100) The information disclosure control section 15 transmits the acquired search range "Area_(i+1)" and the scramble search condition to the scramble searching section 104.

(S101) The scramble searching section 104 receives the search range and the scramble search condition as an input, and acquires the search range for the scramble search according to the scramble condition. When the positional information of the same hierarchy (positional information that is in a lower hierarchical order by the same number from the highest hierarchy "Area_0") is required when acquiring the search range, the hierarchy of the positional information is manipulated by using the detail level converting section 14.

(S101-1) For example, when "Area_1b" is given to the scramble searching section 104 as an input, 50 % of the positional information among the positional information of the same hierarchy is selected randomly, and "Area_1a" is acquired as the search range for the scramble search, for example.

(S101-2) For example, when "Area_2c" is given to the scramble searching section 104 as an input, 50 % of the positional information among the positional information of the same hierarchy is selected randomly, and "Area_2a", "Area_2d" and "Area_2f" are acquired as the search ranges for the scramble search, for example.

(S102) The scramble searching section 104 transmits the one or more acquired search ranges for the scramble search to the information disclosure control section 15.

(S103) The information disclosure control section 15 receives one or more search ranges for the scramble search from the scramble searching section 104, and executes the processing of step S103-1 or S103-2 for the search ranges including the search range "Area_(i+1)" that is acquired in step 8100.

(S103-1) If the search range is the search range for the scramble search, it is transmitted to the search executing section 22, and the received search result object list is discarded.

(S103-2) If the search range is not the search range for the scramble search, steps 104 and thereafter are executed.

As described, while the search is conducted by narrowing down the search ranges in order of "Area_0", "Area_1b", and "Area_2c" in the case of the first exemplary embodiment, the search is conducted in this exemplary embodiment with the function of the scramble searching section 104 of this exemplary embodiment also in the search ranges other than the ranges that include the user's current position, i.e., "Area_0", "Area_1b", and "Area_2c", as in "(Area_0)", "(Area_1a, Area_1b)", "(Area_2a, Area_2c, Area_2d, Area_2f)". This makes it difficult to speculate that the user is in "Area_2c".

Thereby, it becomes difficult for the search service to speculate the user's personal information, so that the personal information can be protected.

The structure of a tenth exemplary embodiment is the same as that of the first exemplary embodiment shown in FIG. 1. This exemplary embodiment is characterized to have a plurality of categories of the user's personal information, and the detail level changes according to the number of categories to be disclosed.

In this exemplary embodiment, the categorizes of the personal information and the disclosing priority order of the categories are saved in the detail level information storage section 11.

The personal information input section 12 receives one or more pieces of personal information from the input device 300 as an input, and transmits it to the information disclosure control section 15.

The information disclosure control section 15 transmits one or more pieces of the personal information received from the personal information input section 12 to the detail level converting section 14, and receives the personal information to be disclosed to the service side.

The detail level converting section 14 controls the categories of the personal information to be disclosed according to the disclosing priority order saved in the detail level information storage section 11. When the most ambiguous personal information is requested, the detail level converting section 14 selects one category of the highest disclosing priority order and outputs it as the personal information of the lowest detail level. Further, when more detailed personal information is requested, the detail level converting section 14 transmits, to the information disclosure control section 15, the category of the next highest disclosing priority order as the personal information to be disclosed to the service side further.

This makes it possible to suppress the number of categories of the personal information to be disclosed to the service.

Operations of this exemplary embodiment will be described by referring to a case where the exemplary embodiment is applied to a system four searching friends of the user, in which the user inputs "name", "ague", "birth date", and "address" as the personal information categories, and the disclosing priority order is set as "name", "age", "birch data", and "address" from the highest to the lowest.

In the detail level information storage section 11, sets of the personal information categories and the disclosing priority order are saved in a following manner.

("name", 4), ("ague", 3), ("birch data", 2), ("address", 1)

In the caste of this exemplary embodiment, the personal information categories disclosed by the information disclosure control section 15 to the searching section 200 increase gradually as in a following manner.

First-time category: "name"
Second-time categories: "fame", "age"
Third-time categories: "name", "age", "birth data" Fourth-time categories: "name", "age", "birth data", "address"

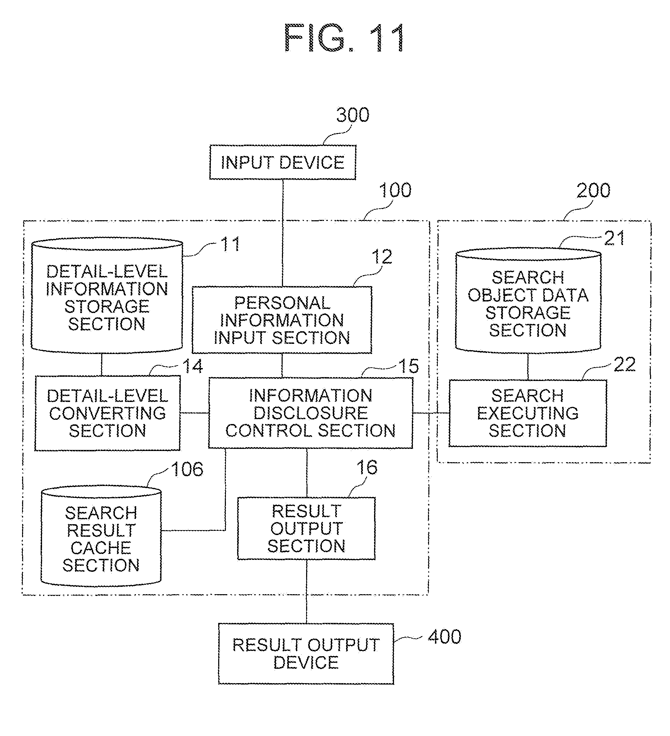

FIG. 11 shows the structure of an eleventh exemplary embodiment of the invention.

This exemplary embodiment is characterized to cache the result of the service to use it for determining the detail level of the personal information to be disclosed first when conducting a next search.

This exemplary embodiment includes a search result cache section 106 in addition to the structure of the first exemplary embodiment shown in FIG. 1.

The information disclosure control section 15 saves the search result object list received from the search executing section 22 to the search result cache section 106. After acquiring the search range from the detail level converting section 14 in step S7 of FIG. 2, the information disclosure control section 15 refers to the search result cache section to compare the service result satisfaction condition with the past search result object list that is obtained by conducting the search within the same detail level search range as the search range acquired from the detail level converting section 14. When it does not satisfy the service result satisfaction condition, the information disclosure control section 15 acquires a still more detailed search range from the detail level converting section 14.

This makers it possible to reduce the number of searches.

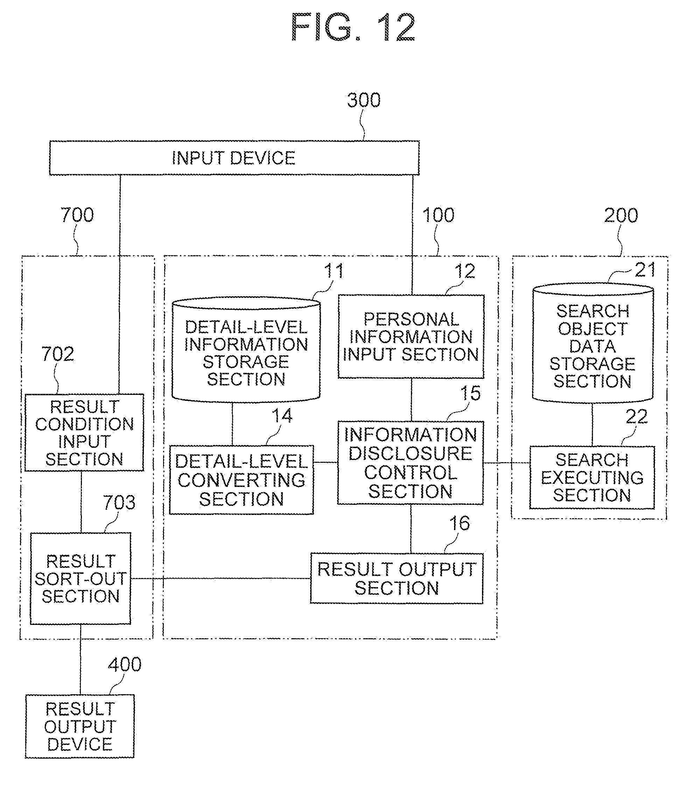

FIG. 12 shows the structure of a twelfth exemplary embodiment of the invention.

This exemplary embodiment is characterized to execute a sort-out action when outputting the result.

This exemplary embodiment includes a sort-out executing terminal section 700 in addition to the structure of the first exemplary embodiment shown in FIG. 1. Further, the result output device 400 is connected to the sort-out executing terminal section 700.

The sort-out executing terminal section 700 is configured with a result condition input section 702 and a result sort-out section 703. The result condition input section 702 receives the condition expected for the search as an input, and transmits the condition to the result sort-out section 703.

The result sort-out section 703 receives the search object result list from the result output section 16, executes the sort-oat action, and outputs the result that matches with the result condition received from the result condition input section 702 to the result output section 16.

This makes it possible to receive the service by suppressing disclosure of the personal information as much as possible within a terminal such as a portable telephone whose memory amount is limited.

Operations of this exemplary embodiment will be described by referring to a case of searching restaurants close to the current position of the user by using a terminal that is capable of sorting out one hundred restaurants as the sort-out executing terminal section 700.

First, it is assumed that the user wishes to know ten nearby restaurants. The user transmits "10 restaurants or less" to the result condition input section 702 by using the input device 300. The information disclosure control section 15 operates by setting the result satisfaction condition as "100 restaurants or less". The result sort-out section 703 receives the search object result list from the result output section 16, and executes a sort-out action according to the distances from the user. The ten closest restaurants from the user position are transmitted as the result of the sort-out action to the result output device 400 to match the condition of "10 restaurants or less".

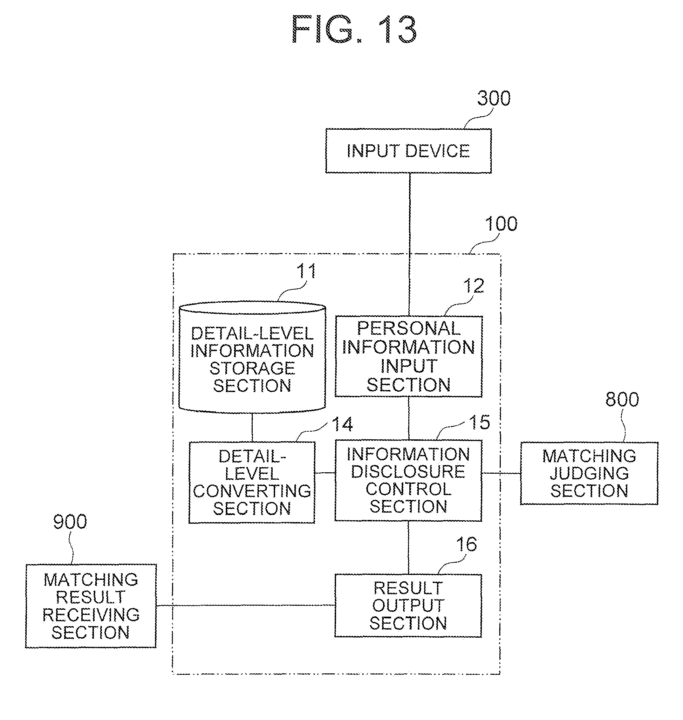

FIG. 13 shows the structure of a thirteenth exemplary embodiment of the invention.

This exemplary embodiment is characterized to apply the present invention to a matching system, an it includes a matching result receiving section 900 instead of the result output section 400 of the first exemplary embodiment shown in FIG. 1. and a matching judging section 800 instead of the searching section 200.

The matching judging section 800 judges whether or not the personal information received from the information disclosure control section 15 satisfies (matches with) a. prescribed condition, and transmits the judged result to the information disclosure control section 15.

The matching result receiving section 900 is a program or a device which receives the judged result from the result output section 16, and executes processing according to the result.

The information disclosure control section 15 operates by setting the service result satisfaction condition as "when matched (satisfied)", When received a result indicating that more detailed personal information is necessary, the information disclosure control section 15 receives the more detailed personal information from the detail level converting section 14, and sends it again to the matching judging section 800. When received is a result indicating that the personal information does not match, it means that there is no result of the service. Thus, the information disclosure control section 15 transmits a result to the result output section 16 indicating that that the personal information does not match. When received is a result indicating that the persona information matches with the condition, the information disclosure control section 1.5 outputs a result to the result output section 1.6 indicating that the personal information matched the condition. The matching result receiving section receives the result from the result output section 16 indicating whether or not the personal information matched with the condition.

This makes it possible to suppress disclosure of information to the minimum necessary detail level when cheeking whether or not the personal Information matches with an access policy used for access control.

The information disclosure control section 100 may be mounted within a client which makes requests to a search server or the like exiting on a network, may be mounted within a server, or may be mounted as a proxy between a client and a server.

Further, each of the above-described exemplary embodiments can be combined arbitrarily.

Other exemplary embodiments of the invention will be described. The information disclosure control system described above may include a condition input section for acquiring a service result satisfaction condition inputted from a user, wherein the information control disclosure control section may acquire the service result satisfaction condition from the condition input section.

In the information disclosure control system, the information disclosure control section may make an inquiry to the service providing device to acquire the detail level of the disclosure personal information to be transmitted first.

The information disclosure control system may include a disclosure range output section which outputs, to the output device, the highest detail level disclosure personal information among the disclosure personal information transmitted from the information disclosure control section to the service providing device.

The information disclosure control system may include a disclosure permitting section which outputs, to the output device, the disclosure personal information the information disclosure control section is about to transmit to the service providing device, and acquires disclosure permitting information inputted by the user indicating whether or not to permit transmission of that disclosure personal information, wherein the information disclosure control section may transmit the disclosure personal information to the service providing device when the disclosure permitting information indicates to permit the transmission.

The information disclosure control system may include a personal information storage section for storing the personal information in advance, wherein the detail level converting section may acquire the personal information read out from the personal information storage section.

The information disclosure control system may include a personal information acquiring section for measuring dynamic personal information, wherein the detail level converting section may acquire the dynamic personal information measured by the personal information acquiring section as a part of or a whole part of the personal information. Further, the personal information acquiring section may include a plurality of measuring devices for measuring dynamic personal information each with different accuracy, wherein: the detail level converting section first acquires dynamic personal information from one measuring device which calculates the dynamic personal information with a lowest accuracy; and when the personal information to be transmitted in the detail level designated by the information disclosure control section cannot be generated from the dynamic personal information, the detail level converting section acquires the dynamic personal information from another measuring device which measures the dynamic personal information with a higher accuracy than that of the one measuring device.

In the information disclosure control system, the information disclosure control section may transmit information, in which the disclosure personal information is combined with the information of the same detail level as that of the disclosure personal information but different from the disclosure personal information, to the service providing device, as the disclosure personal information.

In the information disclosure control system, the personal information is configured with a plurality of categories whose disclosure priority orders are being defined, and the detail level converting section may generate the disclosure personal information by selecting a part of or a whole part of the categories in such a manner that the categories of the higher disclosing priority order come to be included as the detail level becomes higher.

The information disclosure control system may include a services result cache section which stores a service result, received at the information disclosure control section and the detail level of the personal information transmitted when acquiring the service result in a related manner, wherein the information disclosure control section may determine the detail level of the disclosure personal information to be transmitted first to the information providing device by comparing the service result stored in the service result cache section with the service satisfaction condition.

The information disclosure control system may include a sart-out executing section which executes a sort-out action for the service result. Assuming the maximum number that can be sorted out by the sort-out section as a provisional service result satisfaction condition, the information disclosure control section may judge whether or not the service result satisfies the provisional satisfaction condition. When the information disclosure control section judges that the service result satisfies the provisional service result satisfaction condition, the sort-out executing section executes a sort-out action for the information included in the service result, extracts pieces (the number equivalent to the service result satisfaction condition) of information from the highest order of the sert-cut result, and outputs those to the output device.

In the information disclosure control system, the service providing device may provide a matching service which judges whether or not received information satisfies a judging condition, and the service result judging condition may be so set that the service providing device judges the disclosure personal information received from the information disclosure control section satisfies the judging condition.

While the present invention has been described by referring to the embodiments (and example), the present invention is not limited only to those embodiments (and examples) described above. Various kinds of modifications that occur to those skilled in the art can be applied to the structures and details of the present invention within the scope of the present invention.

This Application claims the Priority right based on Japanese Patent Application No. 2007-053300 filed on Mar. 2, 2007, and the disclosure thereof is hereby incorporated by reference in its entirety.

BRIEF DESCRIPTION OF THE DRAWINGS

FIG. 1 is an illustration showing the structure of a first exemplary embodiment of the invention;
FIG. 2 is a flowchart showing operations of the first exemplary embodiment of the invention;

FIG. 3 is an illustration showing the structure of a second exemplary embodiment of the invention;
FIG. 4 is an illustration showing the structure of a fourth exemplary embodiment of the invention;
FIG. 5 is an illustration showing the structure of a fifth exemplary embodiment of the invention;
FIG. 6 is an illustration showing the structure of a sixth exemplary embodiment of the invention;
FIG. 7 is an illustration showing the structure of a seventh exemplary embodiment of the invention;
FIG. 8 is an illustration showing the structure of an eighth exemplary embodiment of the invention;
FIG. 9 is an illustration showing the structure of a ninth exemplary embodiment of the invention;
FIG. 10 is an illustration showing an example of a hierarchical expression of personal information;
FIG. 11 is an illustration showing the structure of an eleventh exemplary embodiment of the invention;
FIG. 12 is an illustration showing the structure of a twelfth exemplary embodiment of the invention; and

FUG. 13 is an illustration showing the structure of a thirteenth exemplary embodiment of the invention.

REFERENCE NUMERALS

| 11 | Detail level information storage section |
| 12 | Personal information input section |
| 13 | Condition input section |
| 14 | Detail level converting section |
| 15 | Information disclosure control section |
| 16 | Result output section |
| 21 | Search object data storage section |
| 22 | Search executing section |
| 51 | Personal information acquiring section |
| 52 | Personal information storage section |
| 100 | Information disclosure control section |
| 101 | Disclosure range output section |
| 102 | Disclosure permitting section |
| 103 | Scramble search condition input section |
| 104 | Scramble searching section |
| 105 | Personal information acquisition control section |
| 106 | Search result cache section |
| 200 | Searching section |
| 300 | Input device |
| 400 | Result output device |
| 500 | Personal information control section |
| 600 | Disclosure permission control input section |
| 700 | Sort-out executing terminal section |
| 702 | Resul.t condition input section |
| 703 | Result sort-out section |
| 800 | Matching judging section |
| 900 | Matching result receiving section |

**Claims**

**1.** An information disclosure control system, comprising:

detail level converting means for acquiring personal information, and generating disclosure personal information whose detail level is below a detail level of the acquired personal information; and
information disclosure control means for transmitting a service request including the disclosure personal information to a service providing device, receiving a service result transmitted from the service providing device in response to the service request, judging whether or not the service result satisfies a service result satisfaction condition, controlling the detail level converting means to regenerate disclosure personal information of a higher detail level than the detail level of the disclosure personal information transmitted when acquiring the service result if judging that the service result does not satisfy the condition, and transmitting the regenerated disclosure personal information to the service providing device

2. The information disclosure control system as claimed in claim 1, comprising condition input means for acquiring a service result satisfaction condition inputted from a user, wherein
the information control disclosure control means acquires the service result satisfaction condition from the condition input means.

3. The information disclosure control system as claimed in claim 1 or 2, wherein the information disclosure control means makes an inquiry to the service providing device to acquire the detail level of the disclosure personal information to be transmitted first.

4. The information disclosure control system as claimed in any one of claims 1-3, comprising disclosure range output means for outputting, to an output device, highest detail level disclosure personal information among the disclosure personal information transmitted from the information Disclosure control means to the service providing device.

5. The information disclosure control system as claimed in any one of claims 1 - 4, comprising disclosure permitting means for outputting, to the output device, the disclosure personal information the information disclosure control means is about to transmit to the service providing device, and acquiring disclosure permitting information inputted by the user indicating whether or not to permit transmission of that disclosure personal information, wherein
the information disclosure control means transmits the disclosure personal information to the service providing device when the disclosure permitting information indicates to permit the transmission.

6. The information disclosure control system as claimed in any one of claims 1 - 5, comprising personal information storage means for storing the personal information in advance, wherein
the detail level converting means acquires the personal information read out from the personal information storage means.

7. The information disclosure control system as claimed in any one of claims 1 - 6, comprising personal information acquiring means for measuring dynamic personal information, wherein
the detail level converting means acquires the dynamic personal information measured by the personal information acquiring means as a part of or a whole part of the personal information.

8. The information disclosure control system as claimed in claim 7, wherein the personal information acquiring means comprise a plurality of measuring means for measuring the dynamic personal information each with different accuracy, wherein
the detail level converting means first acquires the dynamic personal information from one measuring means which calculates the dynamic personal information with a lowest accuracy, and when the personal information to be transmitted in the detail level designated by the information disclosure control means cannot be generated from the dynamic personal information, the detail level converting means acquires the dynamic personal information from another measuring means which measures the dynamic personal information with a higher accuracy than that of the one measuring means.

9. The information disclosure control system as claimed in any one of claims 1 - 8, wherein the information disclosure control means transmits information, in which the disclosure personal information is combined with information that is different from the disclosure personal information but is of the same detail level as that of the disclosure personal information, to the service providing device, as the disclosure personal information.

10. The information disclosure control system as claimed in any one of claims 1 - 9, wherein:

   the personal information is configured with a plurality of categories whose disclosure priority order is being defined; and
   the detail level converting means generates the disclosure personal information by selecting a part of or a whole part of the categories in such a manner that the categories of the higher disclosing priority order come to be included as the detail level becomes higher.

11. The information disclosure control system as claimed in any one of claims 1 - 10, comprising service result cache means for storing a service result received at the information disclosure control means and the detail level of the personal information transmitted when acquiring the service result in a related manner, wherein

the information disclosure control means determines the detail level of the disclosure personal information to be transmitted first to the information providing device by comparing the service result stored in the service result cache means with the service satisfaction condition.

**12.** The information disclosure control system as claimed in any one of claims 1 - 11, the satisfied level being the number of information included in the service result, the system comprising sort-out executing means for executing a sort-out action for the service result, wherein:

assuming the maximum number that can be sorted out by the sort-out means as a provisional service result satisfaction condition, the information disclosure control means judges whether or not the service result satisfies the provisional service result satisfaction condition; and

when the information disclosure control means judges that the service result satisfies the provisional service result satisfaction condition, the sort-out executing means executes a sort-out action for the information included in the service result, extracts pieces (the number equivalent to the service result satisfaction condition) of information from the highest order of the sort-out result, and outputs those to the output device.

**13.** The information disclosure control system as claimed in any one of claims 1 - 12, wherein:

the service providing device provides a matching service which judges whether or not received information satisfies a judging condition; and

the service result judging condition is so set that the service providing device judges the disclosure personal information received from the information disclosure control means satisfies the judging condition.

**14.** An information disclosure control program for enabling a computer to function as:

detail level converting means for acquiring personal information, and generating disclosure personal information whose detail level is below a detail level of the acquired personal information; and

information disclosure control means for transmitting a service request including the disclosure personal information to a service providing device, receiving a service result transmitted from the service providing device in response to the service request, judging whether or not the service result satisfies a service result satisfaction condition, controlling the detail level converting means to regenerate disclosure personal information of a higher detail level than the detail level of the disclosure personal information transmitted when acquiring the service result if judging that the service result does not satisfy the condition, and transmitting the regenerated disclosure personal information to the service providing device.

**15.** The information disclosure control program as claimed in claim 14, which enables the computer to function as condition input means for acquiring a service result satisfaction condition inputted from a user, wherein the information disclosure control means acquires the service result satisfaction condition from the condition input means.

**16.** The information disclosure control program as claimed in claim 14 or 15, wherein the information disclosure control means makes an inquiry to the service providing device to acquire the detail level of the disclosure personal information to be transmitted first.

**17.** The information disclosure control program as claimed in any one of claims 14 - 16, which enables the computer to function as disclosure range output means for outputting, to an output device, highest detail level disclosure personal information among the disclosure persona information transmitted from the information disclosure control means to the service providing device.

**18.** The information disclosure control program as claimed in any one of claims 14 - 17, which enables the computer to function as disclosure permitting means for outputting, to the output device, the disclosure personal information the information Disclosure control means is about to transmit to the service providing device, and acquiring disclosure permitting information inputted by the user indicating whether or not to permit transmission of that disclosure personal information, wherein

the information disclosure control means transmits the disclosure personal information to the service providing device when the disclosure permitting information indicates to hermit the transmission.

**19.** The information disclosure control program as claimed in any one of claims 14 - 18, wherein the detail level converting means acquires the personal information read out from personal information storage means for storing the personal information in advance.

20. The information disclosure control program as claimed in any one of claims 14 - 19, which enables the computer to function as personal information acquiring means for measuring dynamic personal information, wherein the detail level converting means acquires the dynamic personal information measured by the personal information acquiring means as a part of or a whole part of the personal information.

21. The information disclosure control program as claimed in claim 20, wherein the personal information acquiring means comprises a plurality of measuring means for measuring the dynamic personal information each with different accuracy, wherein
the detail level converting means first acquired the dynamic personal information from one measuring means which calculates the dynamic personal information with a lowest accuracy, and when the personal information to be transmitted in the detail level designated by the information disclosure control means cannot be generated from the dynamic personal information, the detail level converting means acquires the dynamic personal information from another measuring means which measures the dynamic personal information with a higher accuracy than that of the one measuring device.

22. The information disclosure control program as claimed in any one of claims 14 - 21, wherein the information, disclosure control means transmits information, in which the disclosure personal information is combined with information that is different from the disclosure personal information but is of the same detail level as that of the disclosure personal information, to the service providing device, as the disclosure personal information.

23. The information disclosure control program as claimed in any one of claims 14 - 22, wherein:

the personal information is configured with a plurality of categories whose disclosure priority order is being defined; and
the detail level converting means generates the disclosure personal information by selecting a part of or a whole part of the categories in such a manner that the categories of the higher disclosing priority order come to be included as the detail level becomes higher.

24. The information disclosure control program as claimed in any one of claims 1.4 - 23, which enables the computer to function as service result cache means for storing a service result received at the information disclosure control means and the detail level of the personal information transmitted when acquiring the service result in a related manner, wherein
the information disclosure control means determines the detail level of the disclosure personal information to be transmitted first to the information providing device by comparing the service result stored in the service result cache means with the service satisfaction condition.

25. The information disclosure control program as claimed in any one of claims 14 - 24, the satisfied level being the number of information included in the service result, the program enabling the computer to function as sort-out executing means for executing a sort-out action for the service result, wherein:

assuming the maximum number that can be sorted out by the sort-out means as a provisional service result satisfaction condition, the information disclosure control means judges whether or not the service result satisfies the provisional service result satisfaction condition; and
when the information disclosure control means judges that the service result satisfies the provisional service result satisfaction condition, the sart-aut executing means executes a sort-out action for the information included in the service result, extracts pieces (the number equivalent to the service result satisfaction condition) of information from the highest order of the sort-out result, and outputs those to the output device.

26. The information disclosure control program as claimed in any one of claims 14 25, wherein:

the service providing device provides a matching service which judges whether or not received information satisfies a judging condition; and
the service result judging condition is so set that the service providing device judges the disclosure personal information received from the information disclosure control section satisfies the judging condition.

**27.** An information Disclosure control method, comprising:

a detail level converting step in which detail level converting means acquires personal information, and generates disclosure personal information whose detail level is below a detail level of the acquired personal information; and an information disclosure control step in which information disclosure control means transmits a service request including the disclosure personal information to a service providing device, receives a service result transmitted from the service providing device in response to the service request, judges whether or not the service result satisfies a service result satisfaction condition, controls the detail level converting means to regenerate disclosure personal information of a higher detail level than the detail level of the disclosure personal information transmitted when acquiring the service result if judging that the service result does not satisfy the condition, and transmits the regenerated disclosure personal information to the service providing device.

**28.** The information disclosure control method as claimed in claim 27, wherein, in the information control disclosure control step, the service result satisfaction condition, input by a user, is acquired.

**29.** The information disclosure control method as claimed in claim 27 or 28, wherein, in the information disclosure control step, an inquiry is made to the service providing device to acquire the detail level of the disclosure personal information to be transmitted first.

**30.** The information disclosure control method as claimed in anyone of claims 27 - 29, comprising a disclosure range output step in which disclosure range output means outputs, to an output device, highest detail level disclosure personal information among the disclosure personal information transmitted from the information disclosure control means to the service providing device.

**31.** The information disclosure control method as claimed in any one of claims 27 - 30, wherein, in the information disclosure step, the disclosure personal information that is about to be transmitted to the service providing device is outputted to the output device, disclosure permitting information inputted by the user indicating whether or not to permit transmission of that disclosure personal information is acquired, and the disclosure personal information is transmitted to the service providing device when the disclosure permitting information indicates to permit the transmission.

**32.** The information disclosure control method as claimed in any one of claims 27 - 31, wherein, in the detail level converting step, the detail level converting means acquires the personal information read out from a personal information storage means which stores the personal information in advance.

**33.** The information disclosure control method as claimed in any one of claims 27 - 32, wherein, in the detail level converting step, the dynamic personal information measured by the personal information acquiring means is acquired as a part of or a whole part of the personal information.

**34.** The information disclosure control method as claimed in claim 33, wherein the personal information acquiring means comprises a plurality of measuring means for measuring dynamic personal information each with different accuracy, wherein in the detail level converting step, dynamic personal information is acquired first from one measuring means for calculating the dynamic personal information with a lowest accuracy, and when the personal information to be transmitted thy detail level designated by the information disclosure control means cannot be generated from the dynamic personal information, the dynamic personal information is acquired from another measuring means which measures the dynamic personal information with a higher accuracy than that of the one measuring means.

**35.** The information disclosure control method as claimed in any one of claims 27 - 34, wherein, in the information disclosure control step, information in which the disclosure personal information is combined with information that is different from the disclosure personal information but is of the same detail level as that of the disclosure personal information is transmitted, to the service providing device, as the disclosure personal information.

**36.** The information disclosure control method as claimed in any one of claims 27 - 35, wherein:

the personal information is configured with a plurality of categories whose disclosure priority order is being defined; and
in the detail level converting step, the disclosure personal information is generated by selecting a part of or a whole part of the categories in such a manner that the categories of the higher disclosing priority order come to be included as the detail level becomes higher.

**37.** The information disclosure control method as claimed in any one of claims 27 - 36, wherein, in the information disclosure control step, a service result received at the information disclosure control means and the detail level of the personal information transmitted when acquiring the service result are stored to a service result storage section in a related manner, and determines the detail level of the disclosure personal information to be transmitted first to the information providing device by comparing the service result stored in the service result cache section with the service satisfaction condition.

**38.** The information disclosure control method as claimed in anyone of claims 27 - 37, the satisfied level being the number of information included in the service result, wherein
in the information disclosure control step, it is judged whether or not the service result satisfied a provisional service result satisfaction condition by considering the maximum number that can be sorted out by the sort-out section as the provisional service result satisfaction condition, the method comprising
a sort-out executing step in which, when it is judged in the information disclosure control step that the service result satisfies the provisional service result satisfaction condition, the sort-out executing means executes a sort-out action for the information included in the service result, extracts pieces (the number equivalent to the service result satisfaction condition) of information from the highest order of the sort-out result, and outputs those to the output device.

**39.** The information disclosure control method as claimed in any one of claims 27 - 38, wherein:

the service providing device provides a matching service which judges whether or not received information satisfies a judging condition; and
the service result judging condition is so set that the service providing device judges the disclosure personal information received from the information disclosure control means satisfies the judging condition.

# FIG. 1

300

INPUT DEVICE

100

200

11

DETAIL-LEVEL
INFORMATION
STORAGE
SECTION

12

PERSONAL
INFORMATION
INPUT SECTION

21

SEARCH OBJECT
DATA STORAGE
SECTION

14

DETAIL-
LEVEL
CONVERTING
SECTION

15

INFORMATION
DISCLOSURE
CONTROL
SECTION

22

SEARCH
EXECUTING
SECTION

16

RESULT
OUTPUT
SECTION

400

RESULT
OUTPUT
DEVICE

# FIG. 2

```
S2 ─┐              ┌──────────────────────────────┐
    │              │  INPUT PERSONAL INFORMATION  │── S1
    │              └──────────────────────────────┘
┌───────────────────────────────────────────┐
│  TRANSMIT PERSONAL INFORMATION TO          │                    ┌── S12
│ INFORMATION DISCLOSURE CONTROL SECTION     │        ┌──────────────────────────┐
└───────────────────────────────────────────┘        │      REQUEST MORE          │
   S5 ──┐ ┌───────────────────────┐   S13           │ DETAILED SEARCH RANGE      │
         │ │ REQUEST FIRST SEARCH  │  ─┐             └──────────────────────────┘
         │ │ RANGE TO DETAIL-LEVEL │                 ┌──────────────────────────┐
         │ │  CONVERTING SECTION   │                 │  ACQUIRE POSITIONAL        │
         │ └───────────────────────┘                 │  INFORMATION OF LOW        │
   S6 ──┐ ┌───────────────────────┐                 │ HIERARCHY AREA "Area_(i+1)"│
         │ │ RETURN MOST AMBIGUOUS │                 └──────────────────────────┘
         │ │ POSITIONAL INFORMATION│                 ┌──────────────────────────┐
         │ │   BASED ON ONTOLOGY   │                 │  CONDUCT SEARCH WITH       │
         │ └───────────────────────┘                 │ SEARCH RANGE "Area_(i+1)"  │
   S7 ──┐ ┌───────────────────────┐                 └──────────────────────────┘
         │ │ CONDUCT SEARCH WITH   │                         S14
         │ │ SEARCH RANGE "Area_i" │
         │ └───────────────────────┘
┌──────────────────────────────────────────┐
│  SEARCH OBJECTS WITHIN SEARCH RANGE       │── S8
└──────────────────────────────────────────┘
```

COMPARE NUMBER "n" OF SEARCH RESULT WITH SEARCH CONDITION — S9

CASE OF SEARCH OTHER THAN FIRST TIME WHERE "n=0"

CASE WHERE "0<n" AND SEARCH CONDITION IS UNSATISFIED

CASE OF FIRST-TIME SEARCH WHERE "n=0"

CASE WHERE "0<n" AND SEARCH CONDITION IS SATISFIED

| TRANSMIT THAT THERE IS NO SEARCH RESULT TO RESULT OUTPUT SECTION | TRANSMIT PREVIOUS SEARCH RESULT OBJECT LIST TO RESULT OUTPUT SECTION | TRANSMIT SEARCH RESULT OBJECT LIST TO RESULT OUTPUT SECTION | CHECK WHETHER OR NOT IT IS POSSIBLE TO ACQUIRE MORE DETAILED SEARCH RANGE |
|---|---|---|---|
| S9-1 | S9-2 | S9-3 | S9-4 |

POSSIBLE TO ACQUIRE POSITIONAL INFORMATION OF LOW HIERARCHY ? — S10

S10-1   YES          NO          S10-2

| RETURN INFORMATION INDICATING MORE DETAILED SEARCH RANGE CAN BE ACQUIRED | RETURN INFORMATION INDICATING MORE DETAILED SEARCH RANGE CANNOT BE ACQUIRED |
|---|---|

POSSIBLE TO ACQUIRE DETAILED SEARCH RANGE ? — S11

S11-1   NO          YES          S11-2

| TRANSMIT PREVIOUS SEARCH RESULT OBJECT LIST TO RESULT OUTPUT SECTION | CONDUCT SEARCH WITH MORE DETAILED SEARCH RANGE |
|---|---|

┌────────────────────────────────────────────────────────────┐
│ OUTPUT SEARCH RESULT OBJECT LIST AS SEARCH RESULT │── S15
└────────────────────────────────────────────────────────────┘

# FIG. 3

300

INPUT DEVICE

100 200

11 12 13 21

DETAIL-LEVEL INFORMATION STORAGE SECTION

PERSONAL INFORMATION INPUT SECTION

CONDITION INPUT SECTION

SEARCH OBJECT DATA STORAGE SECTION

14 15 22

DETAIL-LEVEL CONVERTING SECTION

INFORMATION DISCLOSURE CONTROL SECTION

SEARCH EXECUTING SECTION

16

RESULT OUTPUT SECTION

400

RESULT OUTPUT DEVICE

# FIG. 4

# FIG. 5

300

INPUT DEVICE

100                                              200

11                    12                          21

DETAIL-LEVEL
INFORMATION
STORAGE
SECTION

PERSONAL
INFORMATION
INPUT SECTION

SEARCH OBJECT
DATA STORAGE
SECTION

14                    15                          22

DETAIL-LEVEL
CONVERTING
SECTION

INFORMATION
DISCLOSURE
CONTROL SECTION

SEARCH
EXECUTING
SECTION

16        102

RESULT
OUTPUT
SECTION

DISCLOSURE
PERMITTING
SECTION

400

RESULT
OUTPUT
DEVICE

DISCLOSURE
PERMISSION CONTROL
INPUT SECTION

600

# FIG. 6

52

PERSONAL
INFORMATION
STORAGE
SECTION

100

200

11

DETAIL-LEVEL
INFORMATION
STORAGE
SECTION

12

PERSONAL
INFORMATION
INPUT SECTION

21

SEARCH OBJECT
DATA STORAGE
SECTION

14

DETAIL-LEVEL
CONVERTING
SECTION

15

INFORMATION
DISCLOSURE
CONTROL
SECTION

22

SEARCH
EXECUTING
SECTION

16

RESULT
OUTPUT
SECTION

400

RESULT
OUTPUT
DEVICE

23

# FIG. 7

# FIG. 8

```
┌─────────────────────────────────────────────────────────┐ 500
│        51              52                                 │
│  ┌──────────────┐   ┌──────────────┐                     │
│  │  PERSONAL    │   │  PERSONAL    │                      │
│  │ INFORMATION  │   │ INFORMATION  │                      │
│  │  ACQUIRING   │───│   STORAGE    │                      │
│  │   SECTION    │   │   SECTION    │                      │
│  └──────────────┘   └──────────────┘                     │
└──────────────────────────────────────────────────────────┘
```

| | | 100 | | 200 |
|---|---|---|---|---|

```
┌──────────────────────────────────────────────┐   ┌─────────────────┐
│                    11          12              │   │      21         │
│  105      ┌──────────────┐  ┌────────────┐    │   │  ┌───────────┐  │
│ ┌────────┐│ DETAIL-LEVEL │  │ PERSONAL   │    │   │  │  SEARCH   │  │
│ │PERSONAL││ INFORMATION  │  │INFORMATION │    │   │  │OBJECT DATA│  │
│ │INFORMA-││   STORAGE    │  │   INPUT    │    │   │  │  STORAGE  │  │
│ │ TION   ││   SECTION    │  │  SECTION   │    │   │  │  SECTION  │  │
│ │ACQUISI-│└──────────────┘  └────────────┘    │   │  └───────────┘  │
│ │ TION   │         14          15             │   │         22      │
│ │CONTROL ││ ┌──────────────┐ ┌──────────────┐ │   │  ┌───────────┐  │
│ │SECTION ││ │ DETAIL-LEVEL │ │ INFORMATION  │ │   │  │  SEARCH   │  │
│ └────────┘│ │  CONVERTING  │ │  DISCLOSURE  │─┼───┼──│ EXECUTING │  │
│           │ │   SECTION    │ │   CONTROL    │ │   │  │  SECTION  │  │
│           │ └──────────────┘ │   SECTION    │ │   │  └───────────┘  │
│           │                  └──────────────┘ │   └─────────────────┘
│                                  16           │
│                          ┌──────────────┐     │
│                          │    RESULT    │     │
│                          │    OUTPUT    │     │
│                          │   SECTION    │     │
│                          └──────────────┘     │
└───────────────────────────────────────────────┘
```

RESULT OUTPUT DEVICE — 400

# FIG. 9

300

INPUT DEVICE

100

200

11

DETAIL-LEVEL
INFORMATION
STORAGE
SECTION

103

SCRAMBLE
SEARCH
CONDITION
INPUT
SECTION

12

PERSONAL
INFORMATION
INPUT SECTION

21

SEARCH
OBJECT DATA
STORAGE
SECTION

14

DETAIL-LEVEL
CONVERTING
SECTION

15

INFORMATION
DISCLOSURE
CONTROL
SECTION

22

SEARCH
EXECUTING
SECTION

104

SCRAMBLE
SEARCHING
SECTION

16

RESULT
OUTPUT
SECTION

400

RESULT
OUTPUT
DEVICE

26

# FIG. 10

```
┌─────────────────────────────────────────────────────────┐
│                          Area_0                          │
└─────────────────────────────────────────────────────────┘

    ┌──────────────┐    ┌──────────────┐    ┌──────────────┐
    │   Area_1a    │    │   Area_1b    │    │   Area_1c    │
    └──────────────┘    └──────────────┘    └──────────────┘

 ┌────────┐ ┌────────┐  ┌────────┐ ┌────────┐  ┌────────┐ ┌────────┐
 │Area_2a │ │Area_2b │  │Area_2c │ │Area_2d │  │Area_2e │ │Area_2f │
 └────────┘ └────────┘  └────────┘ └────────┘  └────────┘ └────────┘

                           ↑
                    CURRENT POSITION
```

# FIG. 11

300 — INPUT DEVICE

100

DETAIL-LEVEL INFORMATION STORAGE SECTION — 11

PERSONAL INFORMATION INPUT SECTION — 12

DETAIL-LEVEL CONVERTING SECTION — 14

INFORMATION DISCLOSURE CONTROL SECTION — 15

SEARCH RESULT CACHE SECTION — 106

RESULT OUTPUT SECTION — 16

200

SEARCH OBJECT DATA STORAGE SECTION — 21

SEARCH EXECUTING SECTION — 22

RESULT OUTPUT DEVICE — 400

# FIG. 12

300

INPUT DEVICE

700           100           200

11    12

DETAIL-LEVEL INFORMATION STORAGE SECTION

PERSONAL INFORMATION INPUT SECTION

SEARCH OBJECT DATA STORAGE SECTION
21

702

RESULT CONDITION INPUT SECTION

14

DETAIL-LEVEL CONVERTING SECTION

15

INFORMATION DISCLOSURE CONTROL SECTION

22

SEARCH EXECUTING SECTION

703

RESULT SORT-OUT SECTION

16

RESULT OUTPUT SECTION

400

RESULT OUTPUT DEVICE

# FIG. 13

INPUT DEVICE — 300

100

DETAIL-LEVEL INFORMATION STORAGE SECTION — 11

PERSONAL INFORMATION INPUT SECTION — 12

DETAIL-LEVEL CONVERTING SECTION — 14

INFORMATION DISCLOSURE CONTROL SECTION — 15

MATCHING JUDGING SECTION — 800

MATCHING RESULT RECEIVING SECTION — 900

RESULT OUTPUT SECTION — 16

**INTERNATIONAL SEARCH REPORT**

| International application No. |
| --- |
| PCT/JP2008/052660 |

A. CLASSIFICATION OF SUBJECT MATTER
*G06F17/30(2006.01)i, G06F21/24(2006.01)i, G06Q50/00(2006.01)i*

According to International Patent Classification (IPC) or to both national classification and IPC

B. FIELDS SEARCHED

Minimum documentation searched (classification system followed by classification symbols)
G06F17/30, G06F21/24, G06Q50/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
| --- | --- | --- |
| Y | JP 11-259512 A (Hitachi, Ltd.), 24 September, 1999 (24.09.99), Full text; Figs. 1 to 7 (Family: none) | 1-39 |
| Y | JP 2002-92367 A (Fujitsu Ltd.), 29 March, 2002 (29.03.02), Full text; Figs. 1 to 25 (Family: none) | 1-39 |
| Y | JP 63-257826 A (Mitsubishi Electric Corp.), 25 October, 1988 (25.10.88), Full text; Figs. 1 to 4 (Family: none) | 1-39 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 March, 2008 (10.03.08) | 25 March, 2008 (25.03.08) |

| Name and mailing address of the ISA/ Japanese Patent Office | Authorized officer |
| --- | --- |
| Facsimile No. | Telephone No. |

Form PCT/ISA/210 (second sheet) (April 2007)

**INTERNATIONAL SEARCH REPORT**

| International application No. |
| --- |
| PCT/JP2008/052660 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2006-127395 A (Hitachi, Ltd.),<br>18 May, 2006 (18.05.06),<br>Full text; Figs. 1 to 7<br>(Family: none) | 1-39 |
| A | JP 2002-328924 A (Netcentury Inc.),<br>15 November, 2002 (15.11.02),<br>Full text; Figs. 1 to 15<br>(Family: none) | 1-39 |
| A | JP 2002-109106 A (Hitachi Software Engineering Co., Ltd.),<br>12 April, 2002 (12.04.02),<br>Full text; Figs. 1 to 36<br>(Family: none) | 1-39 |
| A | Masafumi WATANABE, et al., "User Joho o Katsuyo shita Service Seigyo Kiban no Kento -Context ni Motozuita User Joho Tsuchi Policy no Jisso to Hyoka-", IEICE Technical Report (IN2006-17 to 34), 15 June, 2006 (15.06.06), Vol.106, No.118, pages 49 to 54 | 1-39 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003284124 A
- JP 2002324068 A

- JP 2007053300 A